(19) Europäisches Patentamt
European Patent Office
Office européen des brevets

(11) Publication number: **0 089 831**
**A2**

(12) # EUROPEAN PATENT APPLICATION

(21) Application number: 83301524.1

(22) Date of filing: 18.03.83

(51) Int. Cl.³: **H 04 L 1/16**

(30) Priority: 19.03.82 US 359967

(43) Date of publication of application:
28.09.83 Bulletin 83/39

(84) Designated Contracting States:
DE FR GB IT

(71) Applicant: HARRIS CORPORATION
1025 West NASA Boulevard
Melbourne Florida 32919(US)

(72) Inventor: Carney, Alan J.
325 E. Xenia Drive
Fairborn Ohio 45324(US)

(74) Representative: Warren, Keith Stanley et al,
BARON & WARREN 18 South End Kensington
London W8 5BU(GB)

(54) **Data communications system ensuring redundant message suppression.**

(57) A data communications system includes a transmitter (100-108) for transmitting messages, each of which include message characters, a verification portion and a message sequence number. The message sequence number for each message differs from the message preceding it. A receiver (110-122) includes means for verifying the accuracy of the received message and for returning to the transmitter a signal which is either an acknowledgement signal, if the message is inaccurately received, or an error signal, if the message is inaccurately received. To prevent the utilization by the receiver of redundantly received messages, which might occur if the acknowledgement signal is incorrectly received at the transmitter, the receiver includes means (118) for comparing the message sequence number with the message sequence number of the last accurately received message (116) and for storing (126) the message only if the message sequence numbers are different.

FIG-1

TRANSMITTER

RECEIVER

EP 0 089 831 A2

## DATA COMMUNICATIONS SYSTEM
## ENSURING REDUNDANT MESSAGE SUPPRESSION

The present invention relates to data communications systems and, more particularly, to a data communications system wherein redundant messages, i.e., messages which have been accurately received before, are suppressed to prevent duplicate control messages from being executed.

Whenever information is transmitted from one location to another, the possibility of errors being introduced into the information by the transmission medium is present. Even relatively shortlived interference in the transmission medium can destroy one or more digital bits where the information is transmitted in binary or digital form. The consequences of such errors in transmitted digital data messages are apparent in that a given data message may be transformed into another data message by such errors. Although the possibility of converting one control message into another control message is less likely, errors in the transmission of control messages can also be significant.

Accordingly, it is common in the data communications art to transmit binary information in the form of blocks of characters and include within those blocks signals for verifying the accuracy of the digital information. For example, a parity check bit or bits and/or a checksum may be included within a block of transmitted digital data. Also, other coding arrangements as well as timeouts, all well known in the art, may be utilized to ensure the accurate transmission of digital messages.

Such verification techniques are normally used in conjunction with receiver "answer back" to the transmitter to indicate receipt of messages by the receiver. Normally, this is accomplished by the receiver transmitting a "Message Received" signal to the transmitter upon verification or attempted verification of the accuracy of a received message. The Message Received signal typically is an acknowledgement signal for an accurately received message and an error signal for an inaccurately received message. Upon receipt of an error signal, the transmitter retransmits the message corresponding to the error signal, normally the last message transmitted.

The Message Received or verification signals are typically transmitted from a receiving station to a transmitting station over the same or a separate channel of the same transmission medium over which the original information was sent to the receiving station. Accordingly, the verification signals may also be distorted by the transmission medium and, hence, may be incorrectly received by the transmitter. An incorrect receipt of a verification signal by the transmitter will typically result in a double transmission of a message which has already been correctly received by the receiver. Although it is possible that an error signal could be transmuted into an acknowledgement signal, such transmutation would normally require multiple errors and is relatively unlikely.

While the possibility of converting one control message into another due to transmission errors is unlikely, the possibility of retransmission of a control message due to transmission errors in the acknowledgement signal is much higher. In many applications, it is very important that such redundantly transmitted control messages are not also redundantly performed at the receiving station.

For example, in a machine control system, a control message may index a particular piece of apparatus by a given amount from a zero index point. If such a control message is redundantly performed, the relative positioning of the apparatus from the index point is a multiple of the desired displacement actually commanded by the control message. Another example is the transmission of a control message to update the quantity of a given item of stock controlled by an inventory system. Such control messages, if redundantly performed, can lead to improper inventory levels with resultant production delays and/or inventory inefficiencies.

According to one aspect of the present invention, a data communicatons system is provided wherein a receiver suppresses redundant messages which are accurately received by the receiver. The system includes a data transmitter which transmits digital messages in a format including a verification portion which permits verification of the accuracy of the transmitted message at the receiver and a message sequence number.

The message sequence numbers for consecutive messages transmitted by the transmitter are sequentially incremented. Thus, each message will typically have a message sequence number which is equal to the message sequence number of the last transmitted message plus one. It is noted that the message sequence numbers are repeatedly sequenced through a defined series of numbers so that the highest message sequence number is followed by the lowest message sequence number.

To prevent the utilization of a redundantly received message, the receiver maintains a record of the message sequence number of the last accurately received message. Each received message is initially verified by means of the verification portion thereof to determine whether it was accurately received or not. If it was not accurately received, an error signal is returned to the transmitter which once again transmits the message. If the message was accurately received, the message sequence number of that message is compared to the message sequence number of the last accurately received message and if the two message sequence numbers are not equal to one another, the accurately received message is stored and the message sequence number of that message is used to update the message sequence number of the last accurately received message.

It is, therefore, an object of the present invention to provide an improved data communications system which ensures that redundant accurately received messages are suppressed by the receiver.

It is another object of the present invention to provide an improved data communications system wherein each transmitted message includes a message sequence number which differs from the message sequence number included in messages transmitted immediately before and after the given message.

It is yet another object of the present invention to provide an improved data communications system wherein a data receiver maintains a record of the message sequence number of the last accurately received message and will accept a subsequent accurately received message only if its message sequence number differs from the message sequence number of the last accurately received message to ensure that redundant messages are not utilized by the receiver.

Other objects and advantages of the invention will be apparent from the following description, the accompanying drawings and the appended claims.

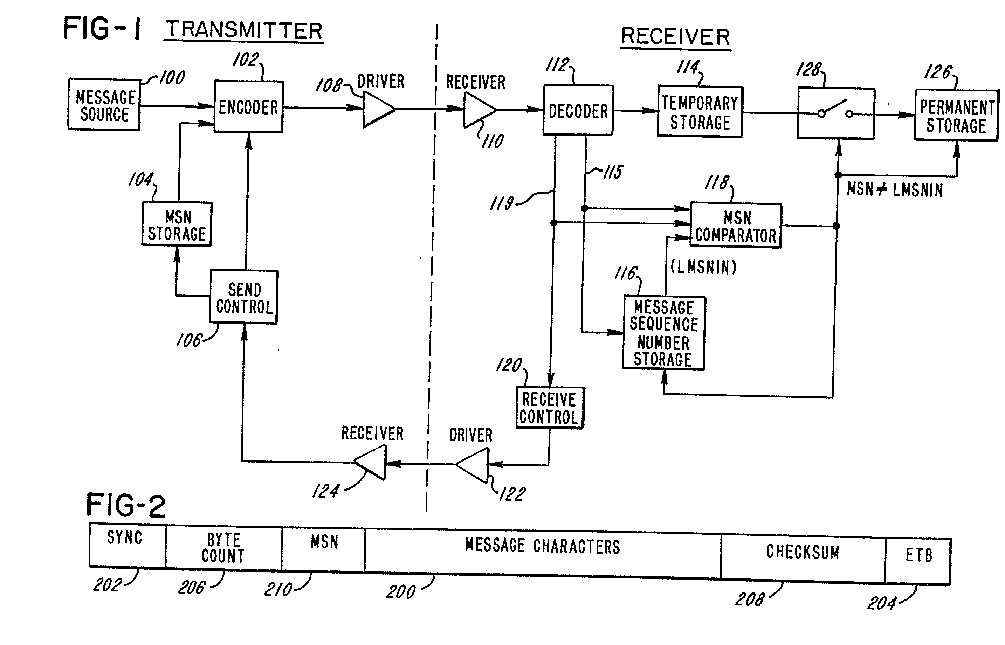

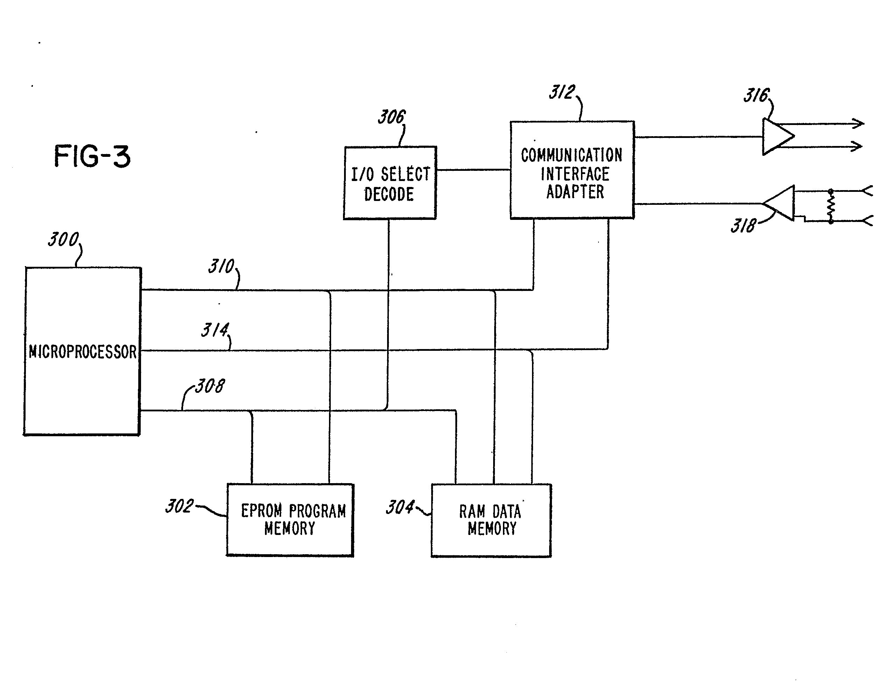

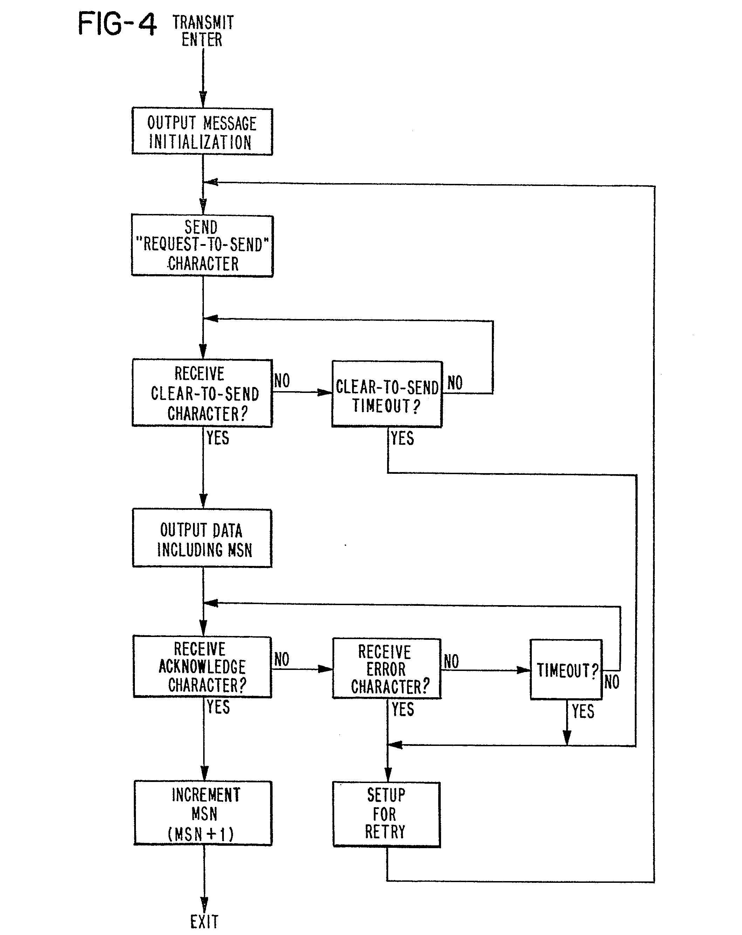

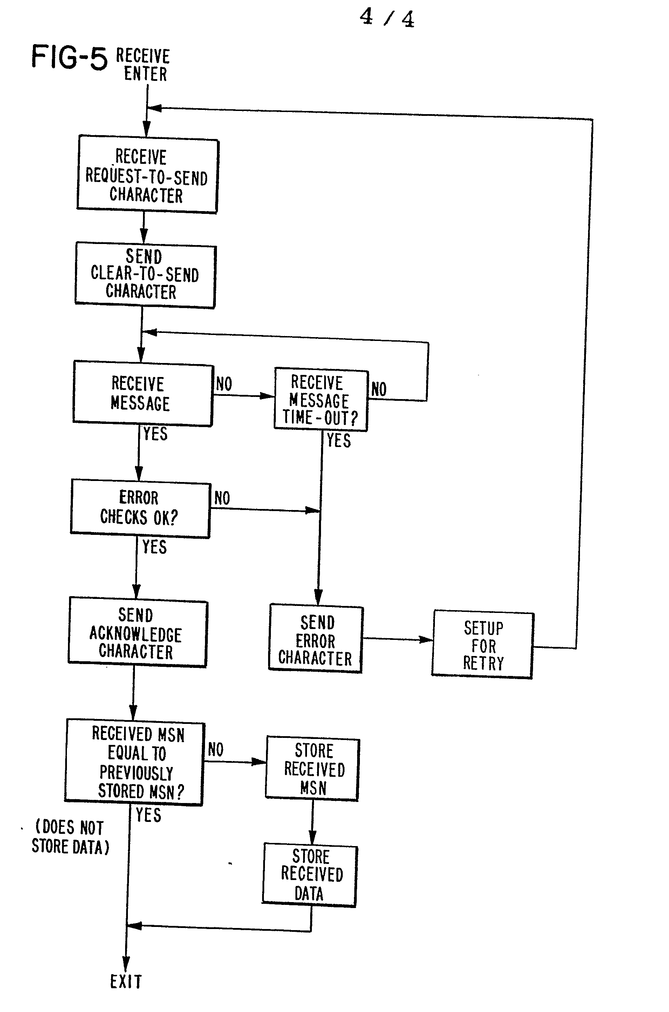

In order that the invention may be more readily understood, reference will now be made to the accompanying drawings, in which: Fig. 1 is a functional block diagram of a transmitter and a receiver in accordance with the present invention, Fig. 2 is a diagram illustrating a typical message format, Fig. 3 is a block diagram of a microprocessor system incorporating the present invention, Fig. 4 is a flow diagram of the operation of the system of Fig. 3 for transmitting messages in accordance with the present invention, Fig. 5 is a flow diagram of the system of Fig. 3 for receiving messages in accordance with the present invention.

Fig. 1 is a functional block diagram of a message transmitter on the left and a message receiver on the right in accordance with the present invention. A message source 100 generates a data or control message which is passed to an encoder 102 together with an appropriate message sequence number which is contained in a message sequence number storage unit 104. The message to be transmitted within the encoder 102 is properly formatted as will be described hereinafter.

Upon stable assembly of the message to be transmitted in the encoder 102, send control logic 106 activates the encoder 102 to transmit the message through a driver 108.

The message is received by a receiver 110 and passed to a decoder 112 and temporary storage 114. In the decoder 112, the message is verified and the message sequence number is passed on conductors 115 to the input of a message sequence number storage unit 116 which contains the message sequence number of the last accurately received message and to a message sequence number comparator 118. The message sequence number comparator 118 receives the message sequence number of the received message from the decoder 112 and the message sequence number of the last accurately received message from the storage unit 116.

If the message fails to be verified, i.e., is erroneously received and contained in the decoder 112 and the temporary storage 114, an appropriate signal is passed on a conductor 119 to receiver control logic 120. The receiver control logic 120 in turn generates an error signal which is passed through a driver 122 and a receiver 124 to the send control logic 106 of the transmitter. The receipt of the error signal causes the transmitter to retransmit the assembled message contained within the encoder 102 to the receiver without updating the message sequence number contained in the storage unit 104.

On the other hand, if the message was accurately received and verified, an appropriate signal indicating such accurate receipt is passed on the conductor 119 to the receiver control logic 120 and to the message sequence number comparator 118. In response to this signal, the receiver control logic 120 generates an acknowledgement signal which is again passed through the driver 122 and the receiver 124 to the send control logic 106. In response to the acknowledgement signal, the send control logic 106 increments the message sequence number stored in the storage unit 104 in preparation for transmission of the next message to the receiver. If the acknowledgement signal is erroneously received by the send control logic 106, the message previously sent is retransmitted to the receiver.

The accurate receipt signal passed to the message sequence number comparator 118 on the conductor 119 causes the comparison of the message sequence number of the accurately received message contained in the decoder 112 and the message sequence number of the last accurately received message contained in the storage unit 116. If the two message sequence numbers are unequal to one another, the message contained in the temporary storage 114 is passed to permanent storage 126 through an electronic switch 128, and the message sequence number of the last accurately received message is stored into the storage unit 116 to update its contents.

In the event that the acknowledgement signal was not accurately received by the transmitter and the message was once again transmitted to the receiver, the message sequence number of the accurately received message would have been equal to the message sequence number of the last accurately received message. The message sequence number comparator 118 upon detecting this equality does not pass the message from temporary storage 114 to permanent storage 126, nor does it bother to restore the message sequence number in the storage unit 116.

Fig. 2 is a diagram illustrating a typical message format for use in a data communications system in accordance with the present invention. The message 200 to be transmitted comprises a variable number of characters and is preceded by a synchronization character 202 and terminated by a message terminator character 204. The receiving station looks for the synchronization character 202 before accepting any data.

A byte count character 206 informs the receiving station of the number of characters

0089831

-8-

contained in the message 200 thereby locating a checksum character 208 and the end of the message. Use of the byte count prevents misinterpretation of data characters as control codes. The byte count includes a message sequence number 210, the message characters 200 and the checksum 208.

The message sequence number 210 is controlled by the transmitter. The message sequence number prevents the receiver from accepting and using a message more than one time if transmission conditions have necessitated retransmission of the message. Each new message sent must have the message sequence number incremented from the value of the preceding message. If the transmitter repeats a message due to transmission errors, it must send the identical message not incrementing the message sequence number.

Each message character includes a parity bit so that the accuracy of the message is verified by such parity as well as the checksum 208. Upon receipt of any message with valid parity and checksum, the receiver compares its message sequence number with the message sequence number of the last accurately received message, and if they are different, the message is sent on to be used by the receiver. If the message sequence numbers are identical, the message is ignored.

The checksum 208 is calculated across the entire message block including the byte count 206, the message sequence number 210, the message characters 200 and the checksum 208 itself, creating a longitudinal check of total message integrity. The checksum is generated by performing an addition of all characters in the message. The sending station performs a two's complement on the checksum before transmitting it and, accordingly, the contents of a receiver checksum adder is equal to 0 for a good transmission.

It is to be noted that the described message verification techniques are only illustrative and that a large variety of message verification techniques are available for use in accordance with the present invention.

With reference to Fig. 3, a microprocessor control system is disclosed which may be used, for example, in a manufacturing process. The microprocessor system shown may comprise a primary control station in that it oversees a number of other secondary stations each of which similarly comprises a microprocessor system as shown in Fig 3.

The secondary stations may be used to control individual machines, such as forms printing presses, and each secondary station communicates with the primary station to transmit data relevant to the operation of the controlled machine and to receive operating instructions from the primary station. Accordingly, each microprocessor system, as shown in Fig. 3, functions both as a data transmitter and as a data receiver.

A microprocessor 300 communicates with a read only memory (ROM) 302, a random access memory (RAM) 304, and an input/output select decoder 306 by means of an address bus 308. The ROM 302 contains program instructions for the operation of the microprocessor 300, while the RAM 304 contains data required by the microprocessor 300 and provides storage space for microprocessor operations.

A data bus 310 is connected to the ROM 302, the RAM 304 and a communications interface adapter 312. Program instructions read from the ROM 302 are passed to the microprocessor 300 by means of the data bus 310. The RAM 304 and the communications interface adapter 312 are controlled by the microprocessor 300 via a control bus 314 to receive data from the data bus 310 or provide data to the data bus 310 dependent upon the control signals.

Data is transmitted to one or more interfacing microprocessor systems from the communication interface adaptor 312 through a driver 316. Similarly, data is received from any interfacing microprocessor system through a receiver 318. It is noted that the block diagram of Fig. 1 and the message format of Fig. 2 provide for communications between two microprocessor systems, as shown in Fig. 3, rather than multiple microprocessor systems. This is for simplicity's sake and ease of description. For communications between multiply connected systems, one of a variety of well-known addressing schemes would be incorporated into each system and include addressing bits within the message format of Fig. 2.

Typical components for constructing the microprocessor system shown in Fig. 3 are listed in the following table:

TABLE I

| 300 | MICROPROCESSOR, MC6809, available from Motorola |
|---|---|
| 302 | EPROM, D2732, available from Intel Corp. |
| 304 | RAM, P2114, available from Intel Corp. |
| 306 | I/O SELECT DECODER, SN74LS139, available from Texas Instrument |
| 312 | COMMUNICATIONS INTERFACE ADAPTER, MC6850, available from Motorola |

316             DRIVER, MC3487P, available
                from Motorola

318             RECEIVER, MC3486P, available
                from Motorola

---

Reference is now made to the flow diagram of Fig. 4 which illustrates the steps taken for transmission of a message from the system shown in Fig. 3. The major steps performed for transmission are also listed chronologically below.

First, an output message to be transmitted is assembled to include a data or control message, a verification portion and a message sequence number. The format of this message can be as previously described with reference to Fig. 2 for transmission between two systems. If multiple systems are connected to communicate with one another, multiple records must be maintained as to the message sequence numbers to be used for each of the systems when receiving messages and appropriate addressing schemes must be included as previously mentioned.

To initialize the communications channel prior to transmission, a request-to-send character is transmitted to the receiver to which a message is to be transmitted. The request-to-send character alerts the receiver that a message is to be sent to it and allows the receiver to prepare for receipt of the message. To that end, the transmitter waits to receive a clear-to-send character from the receiver. If a clear-to-send character is not received within a given timeout period, the request-to-send character is again transmitted to the receiver in a reattempt to send the message.

Once a clear-to-send character has been received by the transmitter, the assembled output message is transmitted to the receiver. The transmitter then waits to receive a signal indicating that the transmitted message was received. If the message was accurately received, an acknowledge signal is received; and, if the message was inaccurately received, an error signal is received. If no receipt verification signal is received within a given timeout period, the message is retransmitted. A retransmission of the message also occurs if an error signal is received.

If an acknowledge signal is received indicating that the transmitted message was accurately received, the message sequence number is incremented by one and the transmission sequence is exited.

Reference is now made to the flow diagram of Fig. 5 which illustrates the steps taken for receipt of a message by the system shown in Fig. 3. The major steps performed for receipt are also listed chronologically below.

First, a receiving system receives a request-to-send character from a transmitting system. Once the receiving system is ready to accept the message, a clear-to-send character is sent to the transmitting system. The receiving system then waits for the message. If a message is not received within a defined timeout period, an error signal is sent to the transmitter and the receiver sets up for a retry of the transmission.

If a message is received by the receiver, the verification portion of the message is processed to determine the accuracy of the received message. If an error is detected, the receiver sends an error signal to the transmitter and sets up for retry of transmission as previously described.

If no errors are detected in the received message, an acknowledgement signal is sent to the transmitter to indicate accurate reception of the message. The message sequence number of the accurately received message is compared to the message sequence number of the last message to be accurately received. If the message sequence number of the accurately received message is not equal to the message sequence number of the last accurately received message (which is the normal situation), the message sequence number is updated to equal the message sequence number of the accurately received message, and the accurately received message is stored for utilization by the receiver.

In the event the message sequence numbers are equal to one another, the received message is not recorded. In this way, redundantly received messages even though accurate, are discarded so that redundant operations are not performed in response to such multiply received messages.

A listing of the portion of the program used in an MC6809 microprocessor to accomplish the operations as depicted in Figs. 4 and 5 and as described above is set forth as follows:

OUPROT OUTPUT PROTOCOL ROUTINE Max09-6DEC9 06-nov-81 08:18 (58)

```
59                      ;     MOVE PRR TO OUTPUT BUFFER
60   0031 108E   8$:    LDY   #PRROUT ; YES,ADDRESS OUTPUT
                                        BUFFER
61   0035 C6 BD         LDB   #OBD
62   0037 A6 80   6$:   LDA   (X)+    ; MOVE PROD RUN DATA TO
                                        OUTPUT BUFFER
63   0039 A7 A0         STA   (Y)+
64   003B 5A            DECB
65   003C 26 F9         BNE   6$
66   003E 8E 0000-      LDX   #PRROUT ; SET UP X REG TO SEND
                                        OUTPUT BUFFER
67   0041 BF 0000-4$:   STX   MSGADD  ; STORE INTO MESSAGE
                                        ADDRESS
68   0044 BF 0000-      STX   MSCPTT  : STORE INTO MESSAGE
                                        POINTER
69                      ;
70                      ;     SET UP THE CHARACTER COUNT.
71                      ;
72   0047 A6 01         LDA   1(X)    ; PUT BYTE COUNT INTO A
73   0049 8B 03         ADDA  #3
74   004B B7 0000-      STA   CHRCNT  ;INITIALIZE FOR MSG.
75                      ;
76                      ;
77                      ;     INSERT MESSAGE SEQUENCE NUMBER
78   004E B6 0000-      LDA   OUTMSN
79   0051 A7 02         STA   2(X)
80                      ;
81                      ;
82                      ;     CALCULATE CHECK SUM
83                      ;
84   0053 30 01         LEAX  1(X)
85   0055 E6 80         LDB   (X)+
86   0057 4F            CLRA
87   0058 1F 02         TFR   D,Y
88   005A 31 3E         LEAY  -2(Y)
89   005C E8 80   10$;  ADDB  (X)+
90   005E 89 00         ADCA  #00
91   0060 31 3F         LEAY  -1(Y)
92   0062 26 F8         BNE   10$
93   0064 43            COMA          : FORM TWOES COMPLIMENT
                                        OF B REGISTER
94   0065 53            COMB
95   0066 C3 0001       ADDD  #0001
96                      ;
97                      ;     INSERT CHECK SUM INTO MESSAGE
98                      ;
99   0069 E7 80         STB   (X)+    : NOTE THIS IS REVERSE OF
                                        NORMAL 16 BIT STORE
100  068 A7 84          STA   (X)
101                     ;
102                     ;
103                     ;
```

```
                              ;    SET DACFLG TO INDICATE A MESSAGE IS
                                   READY TO BE SENT
                              ;
                              ;
                              ;
06D C6 FF            LDB    #OFF     ; -1 IN TO B
06F F7 0000-         STB    DACFLG   : SET MESSAGE FLAG
072 86 08            LDA    #08      ; START IN MODE 8
074 87 0000-         STA    IOMODE
                     ;
                     ;    CHECK THE DAC CHANNEL TO SEE IF IT IS
                          READY
                     ;
                     ;
077 F6 0000-5$:      LDB    DCSTAT
```

INPROT INPUT PROTOCOL ROUTINE MAX09-6DEC9 06-nov-81 08:18 (116)

```
073 B7 0000-         STA    IOMODE   : TRANSITION TO MODE 5
076 7E 01CF          JMP    INPRIN
                     ;    ***********************************
                     ;
                     ;
                     ;
                     ;    **************
                     ;    INPUT MODE =4 LOOK FOR ACK
                     ;    **************
                     ;
                     ;    IF MESSAGE ACKNOWLEDGED THEN INC COUNTER
                     ;    AND REMOVE FROM MESSAGE SCHEDULE BUT
                     ;    TEMP, RECORD.  IF NOT ACKNOWLEDGED THEN
                          GO TO IMODE 2 ROUTINE
                     ;
                     ;    MSGNUM: 00 -- SEQ, SYN      04 -- X
                     ;            01 -- PWR UP/RELOAD 05 -- PRR1
                     ;            02 -- PRR, AVAIL.   06 -- PRR2
                     ;            03 -- REQ, OT,      07 -- MEMORY
                                        STATUS              DUMP
                     ;
                     ;
079 C1 00-IMODO4::   CMPB   *ACK     ; LOOK FOR ACK
07B 26 DA            BNE    IMODO2   ; GO TO MODE 2 ROUTINE TO
                                       COUNT
                              ; ERR AND SET UP FOR RETRY
07D 86 12            LDA    #12      ; OFFSET FOR MESSAGE COUNT
07F BD 0000-         JSR    ABFCNT   ; INCREMENT TOTAL MSG OUT
                                       COUNT
                     ;    MESSAGE HAS BEEN SENT SO RESET
                     ;    BIT IN MSGSCH WORD
                     ;
                     ;
                     ;    MSGNUM IS OFFSET FROM MSB OF THE
                     ;    MSG JUST COMPLETED.
082 86 80            LDA    #80      ; SET MSB TO RESET SCHEDULER
                     ;    REMOVE RELATED MSG FROM SCHEDULER
```

```
150  084 7A 0000- 1$:   DEC   MSGNUM  ; DECREMENT COUNTER
151  087 2D 03          BLT   2$      ; IF LESS THAN ZERO THEN
                                        COMPLETE
152  089 44             LSR A         ; SHIFT BIT RIGHT
153  08A 20 F8          BRA   1$      ; GO BACK AND TEST FOR
                                        COMPLETE
154  08C 43       2$:   COM A         ; ACC A HAS THE BIT RESET
                                        FOR MSG SENT
155  08D B4 0000-       ANDA  MSGSCH  ; RESET BIT OF MSG SENT
156  090 B7 0000-       STA   MSGSCH  ; STORE NEW MSG SCH WORD.
157  093 7F 0000- 25$:  CLR   DACFLG  ; RESET MSGFLAG
158  096 7C 0000-       INC   OUTMSN  ; ADJUST MESSAGE SEQUENCE
                                        NUMBER
159  099 2A 03          BPL   3$
160  09B 7F 0000-       CLR   OUTMSN  ; RESET TO ZERO IF NEG
161                   ;
162                   ;
163                   ;       TEST FOR FINAL PRD MESSAGE.  IF MESSAGE
164                   ;       IS FINAL THEN OUTPUT BUFFERS MUST BE
                              SWITCHED, (DABUFM)
165                   ;
166.                  ;       THE CURRENTLY SENT OUT PRR IS FINAL:
                              1.   SWITCH TO THE NEXT PRR
167                   ;       2.   CLEAR "LAST" & "FIRST" BITS ON THE
168                              SENT OUT PRR.
169                   ;       3.   REMOVED FROM SCHEDULER.
170                   ;       THE CURRENTLY SENT OUT PRR IS TEMP.:
171                   ;       1.   CLEAR "FIRST" BIT
172  09E BE 0000- 3$:  LDX   MSCADR  ; GET ADDR OF PRESENT BUFFER
173  0A1 8C 0000-       CMPX  $PD1MSS ; CHECK FOR PRR1 ?
174  0A4 27 07          BEQ   10$     ; YES, "IS FINAL ?"
```

INPROT INPUT PROTOCOL ROUTINE Max09-6DEC9 06-nov-81 08:18 (290)

```
291                ;       **************
292                ;
293                ;
294                ;
295  13D F7 0000-IMOD14::STB  CHKSUM  ; START OF CHECK SUM
296  140 BE 0000-       LDX   INPPNT  ; GET PRESENT CHAR POSITION
297  143 E7 80          STB   (X)+    ; STORE IN INPUT BUFFER
298  145 BF 0000-       STX   INPPNT  ; SAVE NEW (UPDATED) POINTER
299  148 F7 0000-       STB   RYTCNT  ; STORE BYTE COUNT
300  14B 86 10          LDA   $10     ; OFFSET FOR MODE 16
301  14D B7 0000-       STA   IOMODE  ; TRANSITION TO MODE 16
302  150 BD 0000-       JSR   TIMOUT  ; START 50 MS TIMER
303  153 7E 01CF        JMP   INPRTN  ;        RETURN
304                ;
305                ;
306                ;*******************************************************
307                ;
308                ;
309                ;
```

```
310             ;          **************
311             ;          INPUT MODE = 16 RECEIVE CHAR:
312             ;          **************
313             ;
314             ;          CONTINUE IN THIS MODE UNTIL
315             ;          BYTE COUNT GOES TO ZERO
316             ;
317             ;
318             ;
319  156-BE 0000-IMOD16::LDX  INPPNT  ; POINTER TO NEXT EMPTY LOC
                                         IN BUFF
320  159 E7 80       STB   (X)+      ; UPDATE POINTER AND STORE
                                         CHAR.
321  15B BF 0000-    STX   INPPNT    ; SAVE INCREMENTED POINTER
322  15E 4F          CLRA
323             ;
324             ;          ADD EACH CHARACTER TO THE TWO BYTE
                           CHECKSUM
325             ;
326             ;
327  15F 7A 0000-    DEC   BYTCNT    ; DECREMENT BYTE COUNT
328  162 26 OD       BNE   1$        ; TEST FOR COMPLETE MSG.
329  164 FB 0001-    ADDB  CHKSUM+1  ; ADD HI BYTE TO HIBYTE OF
                                         CHECKSUM
330  167 F7 0001-    STB   CHKSUM+1  ; SAVE CHECK SUM
331  16A 86 12       LDA   $12       ; OFFSET FOR MODE 18
332  16C B7 0000-    STA   IOMODE    ; TRANSITION TO MODE 18
333  16F 20 OC       BRA   2$        ; RETURN
334  171 FB 0000 1$: ADDB  CHKSUM    ; ADD CHAR TO LO BYTE OF
                                         CHECKSUM
335  174 B9 0001-    ADCA  CHKSUM+1  ; ADD CARRY TO HI BYTE OF
                                         CHECKSUM
336  177 B7 0001-    STA   CHKSUM+1  ; SAVE HIBYTE OF CHECKSUM
337  17A F7 0000-    STB   CHKSUM    ; SAVE LO BYTE OF CHECKSUM
338  17D BD 0000- 2$: JSR  TIMOUT    ; START 50 MS TIMER
339  180 7E 01CF     JMP   INPRTN    ;           RETURN
340             ;
341             ;
342             ;*********************************************
343             ;
344             ;
345             ;          **************
346             ;          INPUT MODE = 18 LOOK FOR ETB
347             ;          **************
348             ;          ADJUST CHECKSUM AND CHECK FOR ZERO
```

INPROT INPUT PROTOCOL ROUTINE Max09-6DEC9 06-nov-81 08:18 (348)

```
349             ;          CHECK FOR CORRECTNESS OF MSG SEQ NO.
350             ;
351             ;
352             ;
353  183 C1 00 IMOD18:: CMPB  #FTB   ; CHECK FOR ETB CHAR
354  185 26 3D       BNE   IMOD20    ; BRANCH FOR NON ETB (ERROR)
```

```
355   187 BE 0000-        LDX   CHKSUM   ; LOAD CHECK SUM
356   18A 27 07           BEQ   5$       ; BRANCH IF OK (=ZERO)
357   18C 86 00           LDA   #0       ; OFFSET FOR CHECKSUM ERROR
                                           COUNT
358   18E BD 000-         JSR   ABFCNT   ; INCREMENT CHECKSUM ERROR
359   191 20 31           BRA   IMOD20   ; TRANSITION TO MODE 22
                                           (INIT ERR)
360                 ;
361                 ;     CHECK MESSAGE SEQUENCE NO.
362                 ;     IF NEW=OLD INC MSN EQUAL CNT AND DON'T SET
363                 ;     MSG COMP IF NEW, NE, OLD+1 INC MSN NOT +1
364                 ;     TRANSITION TO IOMODE 20
365                 ;
366   193 B6 0000- 5$:    LDA   OLDMSN
367   196 B1 0001-        CMPA  INPBUF+1
368   199 27 22           REQ   1$
369   19B 4C              INCA
370   19C 2A 02           BPL   10$
371   19E 86 00           LDA   #00
372   1A0 B1 0001- 10$:   CMPA  INPBUF+1
373   1A3 27 05           BEQ   2$
374   1A5 86 10           LDA   #10      ; OFFSET FOR MSN NOT +1
375   1A7 BD 0000-        JSR   ABFCNT   ; INCREMENT ERRROR COUNT
376   1AA 86 FF   2$:     LDA   #OFF     ;
377   1AC B7 0000         STA   MSGCMP   ; SET MSG COMPLETE FLAG
378   1AF B6 0001-        LDA   INPBUF+1
379   1B2 B7 0000-        STA   OLDMSN
380   1B5 86 14   3$:     LDA   #14
381   1B7 B7 0000-        STA IOMODE     ; TRANSITION TO MODE 20
382   1BA 7E 01CF         JMP   INPRTN   ; RETURN
383   1BO 86 0E   1$:     LDA   #0E      ; OFFSET FOR MSN EQUAL
384   1BF BD 0000-        JSR   ABFCNT   ; INCREMENT ERROR COUNT
385   1C2 20 Fl           BRA   3$       ; TRANSITION TO MODE 20
386                 ;
387                 ;********************************************
388                 ;
389                 ;
390                 ;
391                 ;     *************
392                 ;     INPUT MODE = 20 ERROR IF CHAR RECEIVED
393                 ;     *************
394                 ;
395                 ;
396   1C4-86 16 IMOD20::  LDA   #16      ; IOMODE 22
397   IC6 B7 0000- STA     IOMODE         ; TRANSITION TO MODE 22
398   1C9 7E 01CF         JMP   INPRTN   ; RETURN
399                 ;
400                 ;********************************************
401                 ;
402                 ;     *************
403                 ;     INPUT MODE = 22
404                 ;     *************
405                 ;
406   1CC-7E 01CF IMOD22::JMP   INPRTN
```

While the method herein described and the form of apparatus for carrying this method into effect constitute preferred embodiments of this invention, it is to be understood that the invention is not limited to this precise method and form of apparatus and that changes may be made in either without departing from the scope of the invention which is defined in the appended claims as defined in the appended claims.

## CLAIMS

1.      A method of communication between a data transmitter and a data receiver comprising the steps of:

a)    transmitting a message from said transmitter to said receiver;

b)    including a message sequence number within each message transmitted with the message sequence number for different sequentially transmitted messages differing from one another;

c)    receiving said message at said receiver;

d)    determining the accuracy of said message received at said receiver;

e)    acknowledging receipt of each accurately received message by sending an acknowledge signal to said transmitter;

f)    retransmitting a message from said transmitter upon failure to receive an acknowledge signal from said receiver; and

g)    accepting an accurately received message at said receiver only if the message sequence number is different from the message sequence number of the last message accurately received at said receiver.

2.      The method as claimed in claim 1 further comprising the steps of:

h)    acknowledging the receipt of erroneously received messages by sending an error signal to said transmitter; and

i)    retransmitting the last transmitted message from said transmitter including the same message sequence number in response to receipt of an error signal.

3.      The method as claimed in claim 2 further comprising the step of incrementing the message sequence number in said transmitter in response to receipt of an acknowledgement signal.

4.      The method as claimed in claim 1, wherein [2 or 3,] step g) comprises the steps of:

h)     maintaining the message sequence number of the last message accurately received from said transmitter;

i)     comparing the message sequence number of an accurately received message with the message sequence number of the last accurately received message;

j)     storing the accurately received message only if its message sequence number is different from the message sequence number of the last accurately received message; and

k)     storing the message sequence number of a message stored in accordance with step j) as the message sequence number of the last accurately received message.

5. A data communications system comprising in combination, a transmitter (100-108) for transmitting messages which include message sequence numbers (210) wherein the message sequence number for each message differs from the message sequence number of the message preceding it and the message sequence number of the message succeeding it, and a receiver (110-122) for discriminating between newly received and previously received data messages comprising means for verifying the accuracy of received data messages, characterized in that said receiver includes means (118) for identifying the message sequence number contained in the received data messages and means (126) for accepting a verified message only if the message sequence number of said verified message is different from the message sequence number of the last verified message accepted by said receiver.

6.      The data communications system as claimed in claim 5, wherein messages including a verification portion (208) and a message sequence number (210) are transmitted, and wherein said receiver comprises:

decoder means (112) for receiving and decoding said messages to determine the accuracy of receipt and to identify the message sequence numbers of said messages;

storage means (116, 126) for storing accurately received messages and the message sequence number of the last accurately received message; and

comparator means (118) connected to said decoder means and said storage means for comparing the message sequence number of an accurately received message with the message sequence number of the last accurately received message and means (128) for activating said storage means to store said accurately received message and its message sequence number if the compared message sequence numbers are not equal to one another.

7.      The system as claimed in claim 6 wherein the receiver comprises message receipt indicating means (120, 122) for returning an acknowledgement signal to said transmitter upon accurate receipt of a message and an error signal upon inaccurate receipt of a message so that erroneously received messages can be retransmitted to said receiver.

# FIG-1

## TRANSMITTER

MESSAGE SOURCE /100

ENCODER /102

DRIVER /108

MSN STORAGE /104

SEND CONTROL /106

RECEIVER /124

DRIVER /122

## RECEIVER

RECEIVER /110

DECODER /112

TEMPORARY STORAGE /114

128

PERMANENT STORAGE /126

MSN ≠ LMSNIN

MSN COMPARATOR /118

(LMSNIN)

MESSAGE SEQUENCE NUMBER STORAGE /116

RECEIVE CONTROL /120

115

119

# FIG-2

| SYNC | BYTE COUNT | MSN | MESSAGE CHARACTERS | CHECKSUM | ETB |
|------|-----------|-----|--------------------|----------|-----|
| 202 | 206 | 210 | 200 | 208 | 204 |

0089831

FIG-3

FIG-4 TRANSMIT
ENTER

```
          ┌─────────────────┐
          │ OUTPUT MESSAGE  │
          │ INITIALIZATION  │
          └─────────────────┘

          ┌─────────────────┐
          │      SEND       │
          │"REQUEST-TO-SEND"│
          │   CHARACTER     │
          └─────────────────┘

   ┌─────────────────┐  NO  ┌─────────────────┐ NO
   │    RECEIVE      │─────▶│ CLEAR-TO-SEND   │───▶
   │ CLEAR-TO-SEND   │      │   TIMEOUT ?     │
   │  CHARACTER ?    │      └─────────────────┘
   └─────────────────┘            │ YES
        │ YES

   ┌─────────────────┐
   │   OUTPUT DATA   │
   │  INCLUDING MSN  │
   └─────────────────┘

   ┌─────────────────┐ NO ┌─────────────────┐ NO ┌──────────┐ NO
   │    RECEIVE      │───▶│    RECEIVE      │───▶│ TIMEOUT ?│──▶
   │  ACKNOWLEDGE    │    │     ERROR       │    └──────────┘
   │  CHARACTER ?    │    │  CHARACTER ?    │        │ YES
   └─────────────────┘    └─────────────────┘
        │ YES                  │ YES

   ┌─────────────────┐    ┌──────────┐
   │   INCREMENT     │    │  SETUP   │
   │      MSN        │    │   FOR    │
   │   (MSN + 1)     │    │  RETRY   │
   └─────────────────┘    └──────────┘

        EXIT
```

# FIG-5

RECEIVE
ENTER

RECEIVE
REQUEST-TO-SEND
CHARACTER

SEND
CLEAR-TO-SEND
CHARACTER

RECEIVE
MESSAGE — NO → RECEIVE
MESSAGE
TIME-OUT? — NO

YES ↓           YES ↓

ERROR
CHECKS OK? — NO →

YES ↓

SEND
ACKNOWLEDGE
CHARACTER

SEND
ERROR
CHARACTER → SETUP
FOR
RETRY

RECEIVED MSN
EQUAL TO
PREVIOUSLY
STORED MSN? — NO → STORE
RECEIVED
MSN

YES ↓

(DOES NOT
STORE DATA)

STORE
RECEIVED
DATA

EXIT